# EUROPÄISCHE PATENTSCHRIFT

(11) **EP 4 079 665 B1**
(45) Veröffentlichungstag und Bekanntmachung des Hinweises auf die Patenterteilung: **17.12.2025**
(21) Anmeldenummer: 21170053.9
(22) Anmeldetag: 23.04.2021
(51) Int. Cl.: B65G 47/86

(54) **VORRICHTUNG ZUM GREIFEN EINES GEGENSTANDS UND EINE WENIGSTENS EINE SOLCHE VORRICHTUNG UMFASSENDE TRANSPORTVORRICHTUNG**
DEVICE FOR GRIPPING AN OBJECT AND A TRANSPORT DEVICE COMPRISING AT LEAST ONE SUCH DEVICE
DISPOSITIF DE PRÉHENSION D'UN OBJET ET DISPOSITIF DE TRANSPORT COMPRENANT AU MOINS UN TEL DISPOSITIF

(43) Veröffentlichungstag der Anmeldung: 26.10.2022
(73) Patentinhaber: Tyrolon GmbH, 6395 Hochfilzen (AT)
(72) Erfinder: Schulnig, Elmar, 6392 St. Jakob i.H. (AT)
(74) Vertreter: Meissner Bolte Partnerschaft mbB

(56) Entgegenhaltungen:
- WO-A1-2014/069359
- US-A- 5 743 377
- US-A1- 2014 008 927

## Beschreibung

Die Erfindung bezieht sich auf eine Vorrichtung zum Greifen eines Gegenstands, bspw. eines Behälters, nach dem Oberbegriff des Anspruchs 1.

Die Erfindung bezieht sich auch auf eine Vorrichtung zum Transportieren von Gegenständen, beispielsweise Behältern, umfassend einen beweglich angeordneten Träger, an dem wenigstens eine Vorrichtung der vorstehend definierten Art angeordnet ist.

Die JP 2009-161294 A offenbart einen Mechanismus zum Einspannen eines Behälters. Ein erster Arm ist um die Achse eines ersten drehbaren Schafts und ein zweiter Arm ist um die Achse eines zweiten drehbaren Schafts schwenkbar. Klauen sind neben einer durch den Mittelpunkt zwischen den Schäften verlaufenden Mittellinie vorgesehen. Wenn die Arme symmetrisch geschwenkt werden, mit der Mittellinie dazwischen, öffnen und schließen sich die Klauenabschnitte, um zwischen einem Ein- und Ausführen und einem Einklemmen eines Halsabschnitts des Behälters zu wechseln. Der erste drehbare Schaft ist über ein Wälzlager drehbar mit einem Substrat verbunden. Das Substrat ist eine Basiskomponente, um den Mechanismus mit einem Sternrad zu verbinden. Eine Torsionsfeder ist am Außenumfang des ersten drehbaren Schafts befestigt. Der zweite drehbare Schaft ist ebenso drehbar auf dem Substrat montiert. Auf dem Außenumfang ist eine Torsionsfeder montiert. Zwischen den Armen ist ein rollenförmiger Anschlag montiert. Ein Armkörper des ersten Arms weist einen integral ausgebildeten Betätigungshebel auf, der sich nach hinten am ersten drehbaren Schaft vorbei erstreckt. Der Betätigungshebel weist eine Form auf, die sich einigermaßen in Richtung der Mittellinie erstreckt und in Richtung des zweiten drehbaren Schafts gekrümmt ist. Ein hinterer Endabschnitt des Hebels erstreckt sich bis zu einem Gebiet auf der Seite des zweiten drehbaren Schafts. Eine Nocke fungiert als Einleiteinheit für eine Antriebskraft, welche die Arme in eine Richtung schwenkt, in welcher sich die Klauen öffnen. Ein Rollenlager ist in der Mitte des Betätigungshebels zwischen der Position des Nockens und der Position des ersten Schafts befestigt. Eine Übertragungsrolle ist über das Rollenlager auf dem Betätigungshebel abgestützt, so dass sie um die Achse eines Bolzens drehen kann. Diese Achse liegt auf der Mittellinie. Der zweite Arm ist mit einem Vorsprung versehen, welche sich von hinter dem zweiten drehbaren Schaft erstreckt, so dass er in Richtung der Mittellinie gebogen ist. Eine in Richtung der Rolle gewandte Nockenkurve ist auf der Stirnoberfläche des Vorsprungs vorgesehen. Indem der zweite Arm um den zweiten drehbaren Schaft getrieben wird, wird die Nockenkurve durch eine Federkraft gegen die Übertragungsrolle gedrückt.

Das vorbekannte Greifarmpaar weist aufgrund der Form des Betätigungshebels eine ziemlich große Erstreckung nach hinten auf. Es ist deshalb nicht sonderlich kompakt, was insbesondere bei einer sternradförmigen Anordnung einer Vielzahl solcher Paare zu Problemen führen könnte.

Die US 5,743,377 offenbart den Oberbegriff des Anspruchs 1 und einen Transportstern, welcher aus einer drehenden Grundstruktur und einer Mehrzahl von Greifzangen mit schwenkbaren Klammern besteht, die entlang des Umfangs der Struktur positioniert sind. Die Klammern sind aus einem elastischen Kunststoffmaterial gefertigt, drehen sich auf Bolzen, die entlang des Umfangs verteilt sind, und sind über ein verzahntes Getriebe miteinander verbunden. Ein Stift ist ohne Spiel in halbkreisförmigen Nuten gefangen. Der Stift stellt eine Drehverbindung mit umgekehrter Drehrichtung zwischen den beiden Klammern her, so dass nur eine der zwei Klammern unmittelbar angesteuert werden muss. Diese einseitige Ansteuerung eines jeden Griefzangenpaares wird mittels eines schwenkbaren Nockens erreicht. Der Nocken ist in einer Nockenwelle umfasst. Zwei Steuerhebel sind mit dem unteren Ende einer jeden Nockenwelle verbunden.

Der Erfindung liegt die Aufgabe zugrunde, eine Greifvorrichtung und eine Transportvorrichtung der eingangs genannten Art anzugeben, wobei die Greifvorrichtung relativ kompakt ist, zum Öffnen oder Schließen des Armenpaars nur einer der Arme durch eine externe Kraft in Drehung versetzt wird und durch Übertragung einer Kraft von diesem Arm auf den anderen Arm die Drehbewegungen der beiden Arme auf einfache und robuste Weise gekoppelt sind.

Die Aufgabe wird gemäß einem ersten Aspekt durch die Vorrichtung zum Greifen eines Gegenstands gelöst, welche in Anspruch 1 definiert ist.

Die Vorrichtung zum Greifen eines Gegenstands ist besonders zum Greifen, Halten und Führen von Behältern geeignet, wobei der Behälter zwischen den Armen und durch diese gehalten wird. Bei den Behältern kann es sich um Behältern mit zumindest einem länglichen Abschnitt handeln, welcher durch die Vorrichtung gegriffen und gehalten wird. Prototypisch hierfür stehen flaschenförmige Behälter mit einem Flaschenhals. Die Vorrichtung umfasst einen Träger, der beispielsweise an einem Bauteil einer größeren Anlage befestigbar ist. So kann die Vorrichtung beispielsweise als Endeffektor eines Roboterarms dienen oder Teil einer Transportvorrichtung sein. Die Vorrichtung umfasst ein Greifarmpaar, umfassend einen ersten und einen zweiten Arm. Der erste Arm ist um eine erste Schwenkachse schwenkbar, der zweite Arm um eine zweite. Die erste und zweite Schwenkachse können zusammenfallen, werden aber in der Regel im Wesentlichen parallel und radial zueinander beabstandet verlaufen. Die Orientierung der Schwenkachsen ist durch die Anordnung der Arme am Träger bedingt. Jeder der Arme wird sich radial in einer ersten Richtung zu einem oder mehreren freien Enden erstrecken, je nachdem ob der Arm an diesem Ende eine Gabelung aufweist oder nicht. Der Arm wird sich über eine wesentlich kürzere Distanz in der entgegengesetzten radialen Richtung erstrecken. Zwischen den freien Enden der Arme ist der Gegenstand zwischen die Arme einführbar, wenn das Greifarmpaar geöffnet ist, das oder die freien Enden des ersten Arms also von dem oder denen des zweiten Arms durch Schwenken der beiden Arme auseinander bewegt sind. Das Greifarmpaar wird geschlossen, wenn das oder die freien Enden des ersten Arms auf das oder die des zweiten Arms zu bewegt werden, wozu beide Arme geschwenkt werden. Es gilt, die Bewegung des ersten mit der des zweiten Arms zu koppeln. Hierzu ist der Kraftübertragungskörper vorgesehen.

Im Betrieb übt der erste Arm eine Kraft auf den Kraftübertragungskörper aus, die über diesen auf den zweiten Arm übertragen wird. Die Kraft weist eine Hauptkomponente auf, welche parallel zu einer zwischen den Schwenkachsen verlaufenden und in der Bewegungsebene der Arme gelegenen Mittellinie gerichtet ist. Dies heißt, dass ein sich zwischen der Schwenkachse und der Kontaktstelle zum Kraftübertragungskörper erstreckender Armabschnitt als Hebel fungiert, damit ein Drehmoment zum Schwenken des zweiten Arms erzeugt wird.

Dabei drückt der Kraftübertragungskörper auf den zweiten Arm. Dies kann beim sich Öffnen des Greifarmpaars oder beim sich Schließen des Greifarmpaars der Fall sein. Damit der zweite Arm auch in entgegengesetzte Richtung geschwenkt werden kann, ist die Einrichtung zum Erzeugen einer Rückstellkraft vorgesehen. Die Rückstellkraft ist geeignet, den ersten und/oder den zweiten Arm gegen den Kraftübertragungskörper zu drücken.

Statt als Kurvenrolle zu fungieren, fungiert der Kraftübertragungskörper als Schubelement, um die Drehbewegung des ersten Arms auf den zweiten Arm zu übertragen. Der zweite Arm braucht deshalb keine außenseitige Steuerkurve aufzuweisen, der entlang der Kraftübertragungskörper bewegt wird. Im Vergleich zu anderen Mechanismen zum Koppeln der Bewegungen der Arme, wie ineinandergreifenden Zähnen, ist der Kraftübertragungskörper relativ robust. Eine Verzahnung würde zum Beispiel einen viel höheren Verschleiß aufweisen.

Es kann bei der vorgeschlagenen Vorrichtung auf weitere Kraftübertragungseinrichtungen verzichtet werden. Es ist auch keine weitere Betätigungseinrichtung zum Ausüben einer externen Kraft auf den zweiten Arm erforderlich. Die Vorrichtung ist daher mit relativ wenig Bauteilen herstellbar.

Der Kraftübertragungskörper ist in einer zwischen den Schwenkachsen und im Wesentlichen parallel zu diesen verlaufenden Ebene beweglich angeordnet. Er bewegt sich deshalb im Wesentlichen entlang einer gerade Linie, wenn sich das Greifarmpaar öffnet oder schließt. Beim Öffnen, wenn sich die freien Enden der jeweiligen Armen auseinander bewegen, bewegt sich der Kraftübertragungskörper in Richtung der freien Enden.

Schaut man parallel zu den Schwenkachsen auf die Bewegungsebene der Arme, dann ist der Kraftübertragungskörper in einer Ausführungsform zumindest zum Teil zwischen den Schwenkachsen und den freien Enden angeordnet. Es ist zumindest ein Mittelpunkt des Kraftübertragungskörpers zwischen den Schwenkachsen und den freien Enden angeordnet. Dies ist zumindest in einer geöffneten Stellung des Greifarmpaars, in der sich ein freies Ende des ersten Arms in einer maximalen Entfernung zu einem freien Ende des zweiten Greifarmpaars befindet, der Fall. Die radiale Erstreckung der Arme in zum freien Ende entgegengesetzter Richtung kann deshalb relativ gering sein.

In einer Ausführungsform umfasst der Kraftübertragungskörper zumindest einen runden Abschnitt.

Insbesondere kann der Kraftübertragungsköper insgesamt eine runde Form aufweisen. Er kann beispielsweise sphärisch oder kreiszylindrisch gestaltet sein. Insbesondere wenn der Kraftübertragungsköper in in den Armen ausgebildeten Pfannen gelagert ist, kann so ein kontinuierlicher Kontakt gewährleistet werden. Die Kraft wird zumindest annähernd senkrecht zur Kontaktfläche in den zweiten Arm eingeleitet, obgleich dieser eine Drehbewegung durchführt. Öffnungs- und/oder Schließbewegungen sind dadurch gleichmäßiger und es tritt weniger Abrieb auf. Dies ist mit Polyedern oder zylindrischen Körpern mit polygonalem Querschnitt allenfalls mit mehr Herstellaufwand erreichbar.

In einer Ausführungsform ist der Kraftübertragungskörper ein länglicher Körper.

Hierdurch wird die Kraft über eine relativ große Kontaktfläche übertragen. Der längliche Köper kann insbesondere zumindest einen zylindrischen Abschnitt aufweisen, beispielsweise eine insgesamt zylindrische Form aufweisen. In einer besonderen Ausführungsform ist der Kraftübertragungskörper ein Gelenkbolzen (mit oder ohne Bolzenkopf und in der Regel ohne Gewinde).

In einer Ausführungsform weisen der erste Arm und der zweite Arm zueinander gewandte Ausnehmungen auf, zwischen denen der Kraftübertragungskörper gehalten ist.

Die Innenflächen der Ausnehmungen fungieren als Kontaktflächen für den Kraftübertragungskörper. Diese Ausführungsform ist mit wenig Bauteilen umsetzbar. Der Kraftübertragungsmechanismus braucht lediglich den Kraftübertragungskörper und die Arme zu umfassen. Die Ausnehmungen sind leicht in massiven Abschnitten der Arme auszubilden, was zur Robustheit des Mechanismus beiträgt. Parallel zu den Schwenkachsen betrachtet, verläuft zwischen den Schwenkachsen eine Mittellinie, auf die sich die freien Enden der Arme beim Schließen zubewegen. Die Innenflächen der Ausnehmungen weisen jeweils zumindest einen Abschnitt auf, der näher zur Mittellinie als die Schwenkachse des jeweiligen Arms gelegen ist und dessen Normale zumindest eine Komponente parallel zur Mittellinie aufweist, beispielsweise eine Hauptkomponente.

In einem Beispiel dieser Ausführungsform ist wenigstens eine der Ausnehmungen rillenförmig gestaltet.

Beispielsweise können beide Ausnehmungen rillenförmig gestaltet sein. Die Längsachse der Ausnehmung wird im Wesentlichen parallel zu den Schwenkachsen ausgerichtet sein. Die Rillenförmige Gestaltung erlaubt bei Einsatz eines entsprechend ausgeformten Kraftübertragungskörpers eine Kräfteverteilung in axialer Richtung. Unabhängig davon ist der Kraftübertragungskörper leichter montierbar und auch leichter austauschbar. Die Rille kann dazu an wenigstens einem, beispielsweise nur einem, Ende geschlossen sein. Dies wird dann in der Regel das im Betrieb untere Ende sein.

In einer Ausführungsform umfasst zumindest einer der Arme einen Abschnitt, der wenigstens zwei in einer Richtung parallel zur Schwenkachse gespreizte Finger umfasst, deren freien Enden die freien Enden des Arms bilden.

Ein länglicher zu greifender Gegenstand wird so besser ausgerichtet, ohne die Masse des Arms erheblich zu erhöhen. Gerade wenn die Einrichtung zur Ausübung einer Rückstellkraft das Greifarmpaar selbsttätig öffnet oder schließt, führt eine geringe Masse auch zu einer besseren Dynamik.

In einer Ausführungsform umfasst zumindest einer der Arme einen ersten Teil, durch den die Schwenkachse verläuft, und einen mit dem ersten Teil verbundenen zweiten Teil, dessen freie Enden die freien Enden des Arms bilden.

Die zwei Teile können auf unterschiedliche Weisen oder aus unterschiedlichen Werkstoffen hergestellt sein. Es ist außerdem die Möglichkeit eröffnet, für verschiedene Zwecke unterschiedliche zweite Teile vorzusehen.

In einem Beispiel dieser Ausführungsform, in der außerdem der erste Arm und der zweite Arm zueinander gewandte Ausnehmungen aufweisen, zwischen denen der Kraftübertragungskörper gehalten ist, weist der erste Teil die Ausnehmung auf.

Somit ist der Kraftübertragungskörper relativ nahe zur Schwenkachse angeordnet. Der Öffnungswinkel des Greifarmpaars kann relativ groß sein, und der Kraftübertragungskörper trotzdem nur durch Kontakt zu den Innenflächen der Ausnehmungen unverlierbar zwischen den Ausnehmungen gehalten werden. Der erste Teil kann dabei massiv ausgebildet sein, während der zweite Teil gewichtsoptimierend gestaltet ist.

Erfindungsgemäß ist zumindest der erste Arm auf einer am Träger drehbar gelagerten Welle montiert.

Beispielsweise kann die Welle durch eine Bohrung im Träger geführt sein, wobei gegebenenfalls in oder an der Bohrung ein Lager vorgesehen ist. Die Welle ist eine Steuerwelle. Im Vergleich zu anderen Arten von drehbarer Lagerung erlaubt dies eine Ausrichtung der Schwenkachse innerhalb relativ enger Toleranzgrenzen, welche auch bei größeren externen Krafteinwirkungen beibehalten wird. Der zweite Arm kann aus den gleichen Gründen ebenfalls auf einer am Träger drehbar gelagerten, weiteren Welle montiert sein.

Gemäß einem Ausführungsbeispiel umfasst der Betätigungsteil einen auf der Welle montierten Hebel, beispielsweise einen Rollenhebel.

Der erste Arm braucht folglich keinen integral ausgeformten Betätigungsabschnitt aufzuweisen. Bei axial symmetrischer Gestaltung können der erste und der zweite Arm, oder zumindest Teile, durch die die Schwenkachsen verlaufen, baugleich sein. Wenn der Hebel ein Rollenhebel ist, weist er eine drehbar gelagerte Rolle auf, über die durch einen externen Bauteil mit einer Steuerkurve die externe Kraft zum Öffnen oder Schließen des Greifarmpaars eingeleitet werden kann. Dies ist beispielsweise sinnvoll, wenn die Vorrichtung eine bewegliche Komponente einer Transportvorrichtung bildet. Das externe Bauteil kann dann an einer bestimmten Position vorgesehen sein, an der sich das Greifarmpaar öffnet. Die Rückstellkraft würde in einer solchen Ausführungsform eine Schließkraft zum Halten des zu greifenden Gegenstands bilden.

In einer Ausführungsform ist der Hebel axial beabstandet zum ersten Arm auf der Welle montiert.

Die Längsachse des Hebels und die Längsachse des ersten Arms und/oder die Längsachse des zweiten Arms können sich in dieser Ausführungsform kreuzen oder übereinanderliegen. Parallel zu den Schwenkachsen betrachtet, ist die Vorrichtung somit relativ kompakt. Es können mehrere Exemplare der Vorrichtung beispielsweise in einer Transportvorrichtung nah zueinander angeordnet werden.

In einem besonderen Beispiel dieser Ausführungsform ist zumindest einer des Hebels und des ersten Arms in einer Längsrichtung der Welle veränderlich positionierbar.

Hierdurch kann die Greifvorrichtung, ohne die axiale Position (bezogen auf die Schwenkachse des ersten Arms) des Betätigungsteils ändern zu müssen, an die Höhe des zu greifenden Gegenstands angepasst werden.

In einer Ausführungsform ist die Einrichtung zum Erzeugen einer Rückstellkraft derart ausgebildet, dass die Rückstellkraft zwischen den Armen ausgeübt wird.

Der eine Arm übt somit eine anziehende oder abstoßende Kraft auf den anderen Arm aus, gegebenenfalls über ein die beiden Armen verbindendes Element. Im Vergleich zu Torsionsfedern für jeden Arm, deren eine Ende mit dem Träger verbunden ist, kann die richtige Positionierung des Kraftübertragungskörpers relativ zu den beiden Armen besser gewährleistet werden.

In einer Ausführungsform umfasst die Einrichtung zum Erzeugen einer Rückstellkraft wenigstens ein zumindest indirekt mit wenigstens einem der Arme verbundenes elastisches Element.

Die Rückstellkraft ist somit von der Position des oder der Arme abhängig.

In einer Ausführungsform umfasst das wenigstens eine elastische Element eine die Arme verbindende Feder.

Insbesondere kann das wenigstens eine elastische Element eine die Arme umklammernden Feder sein.

Zwischen den Armen bleibt somit Platz für den Kraftübertragungskörper.

Gemäß einem zweiten Aspekt umfasst die erfindungsgemäße Vorrichtung zum Transportieren von Gegenständen, beispielsweise Behältern, einen beweglich angeordneten Träger, an dem wenigstens eine Vorrichtung nach einem der vorhergehenden Ansprüche angeordnet ist.

Die Vorrichtungen zum Greifen eines Gegenstands können aufgrund ihrer kompakten Abmessungen relativ nah zueinander am beweglich angeordneten Träger der Transportvorrichtung angeordnet werden. Die externe Kraft kann durch eine stationär angeordnete, eine Steuerkurve aufweisende Komponente der Transportvorrichtung ausgeübt werden, wenn der Betätigungsteil aufgrund der Bewegung des Trägers der Transportvorrichtung diese Steuerkurve kontaktiert. In der Regel wird dann das Greifarmpaar geöffnet. Die Rückstellkraft bewirkt das Schließen, wenn die betroffene Vorrichtung zum Greifen eines Gegenstands weiterbewegt wird. Die Vorrichtungen zum Greifen eines Gegenstands können insbesondere entlang einem Rand des Trägers angeordnet sein, also von diesem Abstehen.

In einer Ausführungsform ist der Träger drehbar angeordnet und ist eine Vielzahl an erfindungsgemäßen Vorrichtungen am Träger angeordnet.

Insbesondere kann der Träger radförmig gestaltet sein. Dabei können die Greifvorrichtungen, insbesondere die Arme, zumindest teilweise über einen äußeren Rand des radförmigen Trägers hinausragen, so dass sich eine sternförmige Anordnung ergibt. Die Arme bilden dabei die Strahlen. Der Träger der Transportvorrichtung kann dadurch eine geringe Erstreckung in einer Richtung parallel zu seiner Rotationsachse aufweisen, und es können trotzdem ziemlich lange Gegenstande mit ihren Längsachsen parallel zur Rotationsachse transportiert werden.

Alternativ können die Vorrichtungen zum Greifen eines Gegenstands beispielsweise an einer Transportkette oder einem Transportband angeordnet sein, wobei sich die Arme in der Regel quer zur Transportrichtung erstrecken werden.

Eine Ausführungsform der Transportvorrichtung umfasst ferner wenigstens eine Steuerkomponente, welche eine Steuerkurve zum Betätigen des Betätigungsteils der am Träger angeordneten wenigstens einen Vorrichtungen definiert.

Die Erfindung wird unter Bezugnahme auf die beiliegenden Zeichnungen näher erläutert, wobei:
Fig. 1 eine perspektivische Ansicht eines Teils einer Transportvorrichtung ist;
Fig. 2 eine erste perspektivische Ansicht einer ersten Ausführungsform einer Vorrichtung zum Greifen eines Gegenstands ist;
Fig. 3 eine zweite perspektivische Ansicht der Vorrichtung der Fig. 1 ist;
Fig. 4 eine Seitenansicht der Vorrichtung der Fig. 2 und 3 ist;
Fig. 5 eine Draufsicht der Vorrichtung der Fig. 2-4 ist;
Fig. 6 eine Schnittdarstellung der Vorrichtung der Fig. 2-5 ist;
Fig. 7 eine Explosionszeichnung der Vorrichtung der Fig. 2-6 ist;
Fig. 8 eine erste perspektivische Ansicht einer zweiten Ausführungsform einer Vorrichtung zum Greifen eines Gegenstands ist;
Fig. 9 eine zweite perspektivische Ansicht der Vorrichtung der Fig. 8 ist;
Fig. 10 eine erste Seitenansicht der Vorrichtung der Fig. 8 und 9 ist;
Fig. 11 eine zweite Seitenansicht der Vorrichtung der Fig. 8-10 ist;
Fig. 12 eine Unteransicht der Vorrichtung der Fig. 8-11 in einem geschlossenen Zustand ist;
Fig. 13 eine Draufsicht der Vorrichtung der Fig. 8-12 in dem geschlossenen Zustand ist;
Fig. 14 eine Draufsicht der Vorrichtung der Fig. 8-13 in einem geöffneten Zustand ist;
Fig. 15 eine Seitenansicht der Vorrichtung der Fig. 8-14 in dem geschlossenen Zustand, in welchem sie eine Flasche an ihrem Flaschenhals hält, ist;
Fig. 16 eine perspektivische Ansicht der Vorrichtung der Fig. 8-15 im in der Fig. 15 dargestellten Zustand ist;
Fig. 17 eine Explosionszeichnung der Vorrichtung der Fig. 8-16 ist;
Fig. 18 eine Explosionszeichnung einer weiteren Ausführungsform einer Baugruppe für eine Transportvorrichtung, welche eine dritte Ausführungsform einer Vorrichtung zum Greifen eines Gegenstands umfasst, ist; und
Fig. 19 eine Schnittzeichnung der in der Fig. 18 dargestellten Baugruppe ist.

Es wird nachfolgend zunächst eine erste Transportvorrichtung für flaschenähnliche Behälter näher erläutert, welche aber prinzipiell auch zum Fördern andersartiger Gegenstände geeignet ist oder hierzu angepasst werden kann.

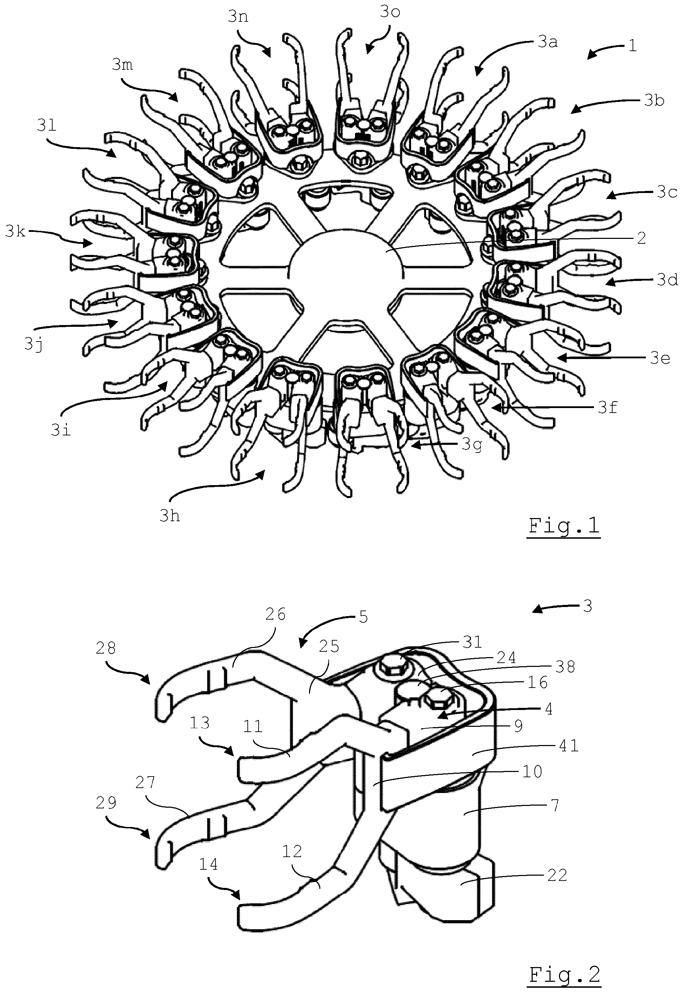

Die Transportvorrichtung umfasst eine Baugruppe 1 (Fig. 1), welche ein drehbar angeordnetes Trägerrad 2 und eine Vielzahl von Greifvorrichtungen 3a-o umfasst. Wenn die Baugruppe 1 montiert ist, ist das Trägerrad 2 um eine zentrale Achse drehbar angeordnet, und es ist eine (nicht näher dargestellte) Antriebseinrichtung mit dem Trägerrad 2 gekoppelt, um es zu bewegen. Die Greifvorrichtungen 3a-o sind baugleich. In der dargestellten Ausführungsform sind die Greifvorrichtungen 3a-o äquidistant und in gleichem radialem Abstand zur Rotationsachse des Trägerrads 2 entlang dessen Umfang angeordnet.

In der dargestellten Ausführungsform ist das Trägerrad 2 flächenförmig gestaltet. Die Stärke des Trägerrads 2 ist geringer als die axiale Erstreckung einer jeden Greifvorrichtung 3. In der dargestellten Ausführungsform stehen die Greifvorrichtungen 3 a-o in beiden axialen Richtungen und radial vom Trägerrad 2 ab, wozu sie an einem äußeren Rand des Trägerrads 2 angeordnet sind.

Wenn die Baugruppe 1 betriebsbereit montiert ist, wird sich radial näher zur Rotationsachse als der Rand, der den Umfang des Trägerrads 2 bestimmt, wenigstens eine (nicht dargestellte) Steuerkomponente befinden. Diese Steuerkomponente weist eine Steuerkurve auf. Eine solche Steuerkomponente ist stationär angeordnet. Wenn eine der Greifvorrichtungen 3a-o an der Steuerkomponente vorbeigeführt wird, wird sie von der Steuerkomponente betätigt und sich zur Aufnahme oder Abgabe eines der zu transportierenden Gegenstände öffnen. Die Greifvorrichtung 3 schließt sich danach selbsttätig, wenn sie weiter bewegt wird.

Jede Greifvorrichtung 3 umfasst (Fig. 2-7) einen ersten Arm 4 und einen zweiten Arm 5. Der erste Arm 4 und der zweite Arm 5 bilden ein Greifarmpaar. In der dargestellten Ausführungsform ist pro Greifvorrichtung nur ein einziges Greifarmpaar vorgesehen. Es können aber auch mehr als ein Greifarmpaar vorgesehen sein.

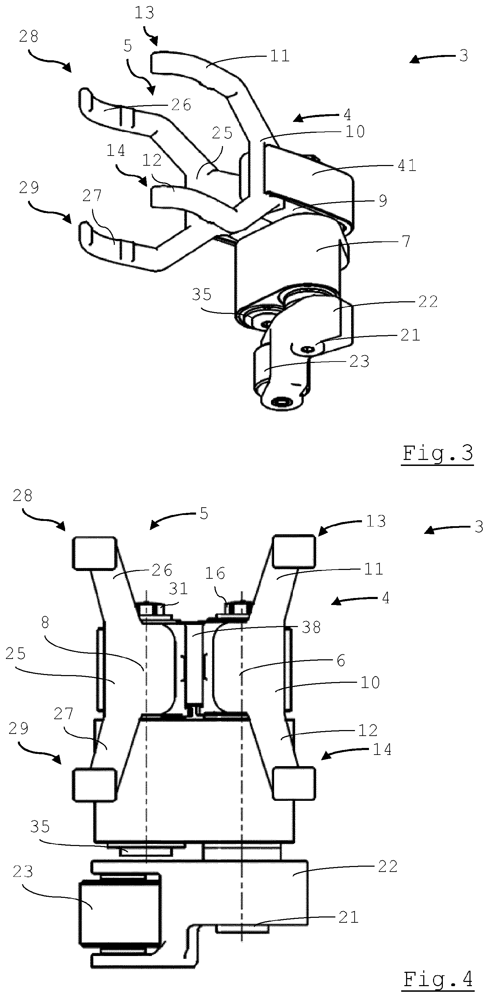

Der erste Arm 4 ist um eine erste Schwenkachse 6 (Fig. 4) drehbar an einem Träger 7 in Form eines Doppelgehäuses gelagert. Der zweite Arm 5 ist um eine zweite Schwenkachse 8 drehbar am Träger 7 gelagert. Die Schwenkachsen 6,8 sind im Wesentlichen parallel zueinander und, in der dargestellten Ausführungsform, auch im Wesentlichen parallel zur Rotationsachse der Baugruppe 1 ausgerichtet.

Man kann sich eine Mittelebene vorstellen, die parallel zu den beiden Schwenkachsen 6,8 zwischen den beiden Armen 4,5 verläuft und der sich die Arme 4,5 beim Schließen des Greifarmpaars nähern und von der sie sich beim Öffnen entfernen. In einer Draufsicht parallel zu den Schwenkachsen 6,8 ergibt sich eine Mittellinie. Wenn die Arme 4,5, wie vorliegend, symmetrisch angeordnet sind, bildet die Mittellinie zumindest annähernd eine Öffnungswinkelhalbierende.

Um dies sicherzustellen, sind die Schwenkbewegungen des ersten Arms 4 und des zweiten Arms 5 gekoppelt, obwohl die Steuerkomponente der Transportvorrichtung nur ein auf den ersten Arm 4 ausgeübtes Drehmoment erzeugt.

Der erste Arm 4 ist in der dargestellten Ausführungsform aus zwei Teilen aufgebaut, nämlicher aus einem innenliegenden ersten Armteil 9 und einem außenliegenden zweiten Armteil 10. Der erste Armteil 9 ist ein im Wesentlichen massiver Körper. Der zweite Armteil 10 fungiert als Schwenkklammer. Der zweite Armteil 10 umfasst zwei in axialer Richtung (bezogen auf die erste Schwenkachse 6) gespreizte Finger 11,12, deren freie Enden 13,14 freie Enden des ersten Arms 4 bilden. In der dargestellten Ausführungsform sind die Finger 11,12 der Kontur eines Flaschenhals angepasst, also gekrümmt.

Außerdem weist der zweite Armteil 10 einen Abschnitt auf, der, parallel zur ersten Schwenkachse 6 betrachtet, in Bezug auf die oben erwähnte Mittellinie nach außen gewinkelt ist. Das Ende des zweiten Armteils 10 an dem er mit dem ersten Armteil 9 verbunden ist, liegt näher zur Mittellinie als ein darauf in Richtung des freien Endes des ersten Arms 4 folgender Abschnitt des zweiten Armteils 10.

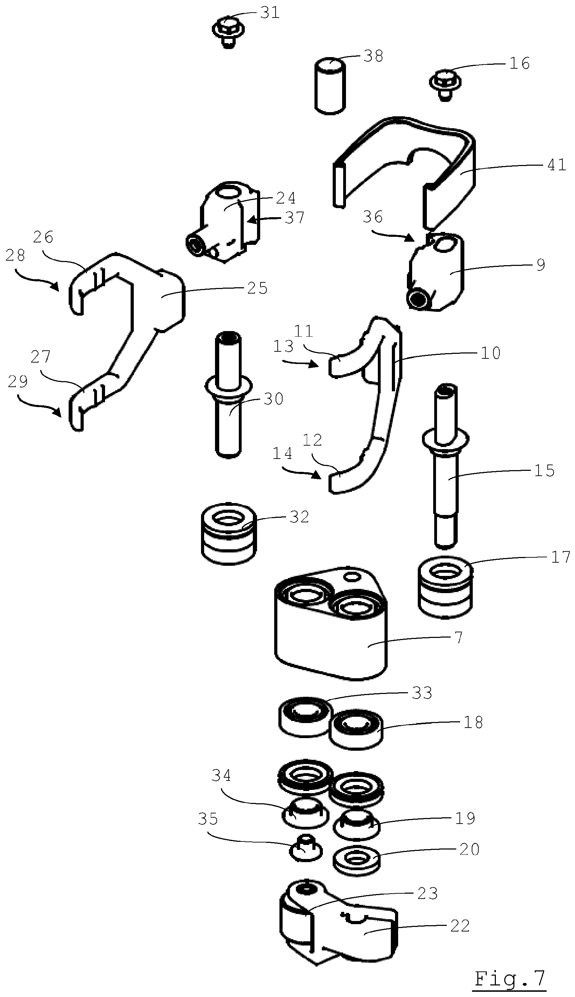

Der erste Armteil 9 ist auf eine Steuerwelle 15 verdrehsicher (Fig. 7) fixiert. In der dargestellten Ausführungsform ist ein Abschnitt der Steuerwelle 15 durch eine Bohrung im ersten Armteil 9 geführt. Dieser Abschnitt und die Bohrung weisen einen von einer kreisrunden Form abweichenden Querschnitt auf. Eine Verdrehung wird durch Formschluss verhindert. Eine erste Steuerwellenschraube 16 sichert den ersten Armteil 9 in axialer Richtung. Die Steuerwelle 15 fungiert somit als Antriebsstange.

Die Steuerwelle 15 ist mittels eines ersten Dichtrings 17,eines ersten Lagers 18, einer ersten Buchse 19, einer erste Scheibe 20 und einer zweiten Steuerwellenschraube 21 am Träger 7 befestigt und drehbar gelagert. Zwischen der ersten Scheibe 20 und der zweiten Steuerwellenschraube 21 ist ein Rollenhebel 22 angeordnet, der als Betätigungsteil für die Greifvorrichtung 3 fungiert. Der Rollenhebel 22 ist verdrehsicher auf der Steuerwelle 15 montiert.

Der Rollenhebel 22 weist eine drehbar gelagerte Rolle 23 auf. Diese ist dazu eingerichtet, der Steuerkurve einer stationären Steuerkomponente zu folgen, wenn die Greifvorrichtung 3 an dieser Steuerkomponente vorbeigeführt wird. Dabei wird ein Drehmoment erzeugt, das auf den ersten Arm 4 ausgeübt wird. Der erste Arm 4 überträgt eine Kraft auf den zweiten Arm 5, so dass einzig die auf den einen Betätigungsteil ausgeübte externe Kraft beide Arme 4,5 bewegt. In der dargestellten Ausführungsform öffnet sich dabei das Greifarmpaar entgegen einer Rückstellkraft. Prinzipiell ist aber auch eine Ausführungsform denkbar, in der sich das Greifarmpaar entgegen einer Rückstellkraft schließt und der Betätigungsteil zum Öffnen des Greifarmpaars eingerichtet ist.

Da der Rollenhebel 22 axial beabstandet zum ersten Arm 4 angeordnet ist, können er und zumindest einer der Arme 4,5 sich, parallel zu den Schwenkachsen 6,8 betrachtet, überdecken. Dadurch ist der Fußabdruck der Greifvorrichtung 3 relativ klein.

Der zweite Arm 5 ist in der dargestellten Ausführungsform ebenfalls aus zwei Teilen aufgebaut, nämlicher aus einem innenliegenden ersten Armteil 24 und einem außenliegenden zweiten Armteil 25. Der erste Armteil 24 ist ein im Wesentlichen massiver Körper. Der zweite Armteil 25 fungiert als Schwencklammer. Der zweite Armteil 25 umfasst zwei in axialer Richtung (bezogen auf die zweite Schwenkachse 8) gespreizte Finger 26,27, deren freie Enden 28,29 freie Enden des zweiten Arms 5 bilden. In der dargestellten Ausführungsform sind die Finger 26,27 der Kontur eines Flaschenhalses angepasst, also gekrümmt. In der dargestellten Ausführungsform ist der zweite Teil 10 des ersten Arms 4 das Spiegelbild des zweiten Teils 25 des zweiten Arms 5. Da sie selbst in Bezug auf eine Symmetrieebene quer zu den Schwenkachsen 6,8 symmetrisch sind, sind die zweiten Armteile 10,25 sogar baugleich, nur umgekehrt angeordnet montiert.

Wie der zweite Armteil 10 des ersten Arms 4 weist der zweite Armteil 10 einen Abschnitt auf, der, parallel zur zweiten Schwenkachse 8 betrachtet, in Bezug auf die oben erwähnte Mittellinie nach außen gewinkelt ist. Das Ende des zweiten Armteils 25 an dem er mit dem ersten Armteil 24 verbunden ist, liegt näher zur Mittellinie als ein darauf in Richtung des freien Endes des zweiten Arms 5 folgender Abschnitt des zweiten Armteils 25.

Der erste Armteil 24 des zweiten Arms 5 ist das Spiegelbild des ersten Armteils 9 des ersten Arms 4. Allerdings weist er in der dargestellten Ausführungsform eine runde Bohrung auf, durch die eine zweite Welle 30 geführt ist. Nachdem die zweite Welle 30 nicht als Steuerwelle fungiert, ist eine verdrehsichere Verbindung nämlich nicht erforderlich. Zur Befestigung ist wieder eine erste zweite Wellenschraube 31 vorgesehen. Ferner ist die zweite Welle 30 mittels eines zweiten Dichtrings 32, eines zweiten Lagers 33, einer zweiten Buchse 34 und einer zweiten zweite Wellenschraube 35 am Träger 7 befestigt und drehbar gelagert. Andere Arten von Befestigung oder Lagerung sind natürlich möglich.

Im ersten Teil 9 des ersten Arms 4 und im ersten Teil 24 des zweiten Arms 5 sind zueinander und zur oben erwähnten Mittelebene gewandte Ausnehmungen 36,37 ausgebildet. Die Ausnehmungen 36,37 sind im Wesentlichen rillenförmig gestaltet, allerdings in axialer Richtung an den näher zum Träger 7 gelegenen jeweiligen Enden begrenzt. Auf diesen Begrenzungen stützt sich ein zwischen den Ausnehmungen 36,37 gehaltener Kraftübertragungskörper 38 ab.

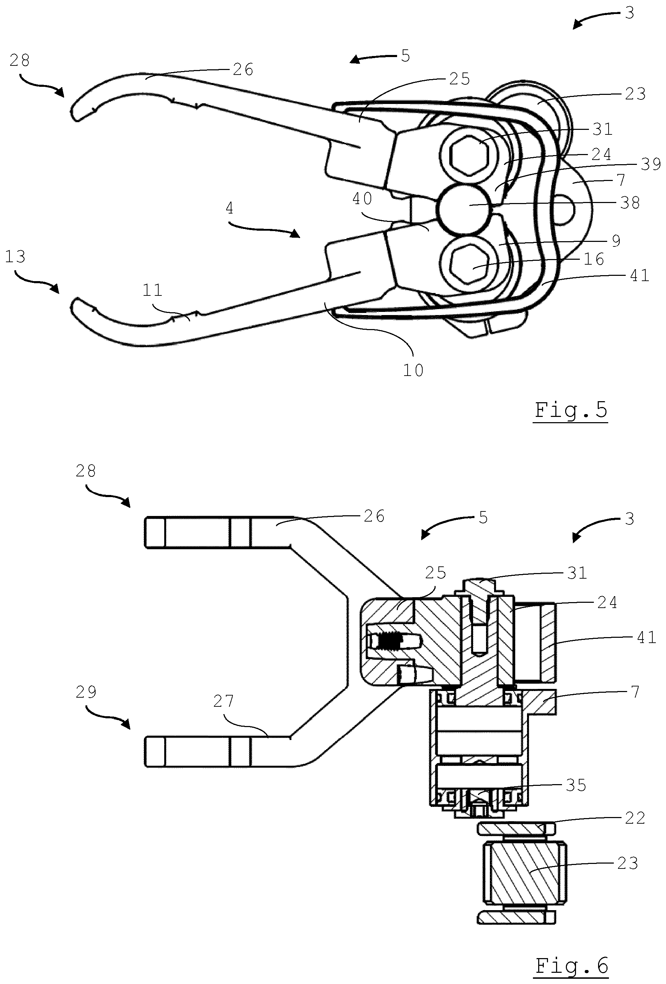

Die Ausnehmungen 36,37 weisen eine in axialer Richtung betrachtet runde Innenkontur auf. Sie umgeben den Kraftübertragungskörper 38 soweit, dass über diesen eine überwiegend parallel zur oben erwähnten Mittelebene gerichtete Kraft übertragen werden kann. Ein Abschnitt 39 (Fig. 5) des ersten Teils 9 des ersten Arms 4 und ein Abschnitt 40 des ersten Teils 24 des zweiten Arms 5 begrenzen einen jeweiligen Abschnitt einer Innenfläche der ersten Ausnehmung 36 bzw. der zweiten Ausnehmung 37. Diese Flächenabschnitte weisen eine jeweilige Normale auf, die eine Hauptkomponente parallel zur oben erwähnten Mittelebene aufweist, zumindest in geschlossenem Zustand des Greifarmpaars. Außerdem ist sie zwischen den Schwenkachsen 6,8, aber beabstandet zur jeweiligen Schwenkachse 6,8 gelegen. Somit wird durch die übertragene Kraft ein Drehmoment erzeugt.

Eine die Arme 4,5 umklammernde Feder 41 übt eine Rückstellkraft aus, im vorliegenden Fall eine Schließkraft. In anderen Ausführungsformen können zusätzlich oder alternativ andere Einrichtungen zum Ausüben einer Rückstellkraft vorgesehen sein. Beispiele sind der WO 2020/108758 A1 zu entnehmen.

Der Kraftübertragungskörper 38 ist in der dargestellten Ausführungsform ein länglicher Körper. Aufgrund der Form der Ausnehmungen 36,37 erstreckt sich die Längsachse des Kraftübertragungskörpers im Wesentlichen in axialer Richtung, bezogen auf die Schwenkachsen 6,8. In einer alternativen Ausführungsform kann der Kraftübertragungskörper 38 kugelförmig und können die Ausnehmungen 36,37 zylindrisch oder sphärisch gestaltet sein. In der dargestellten Ausführungsform ist der Kraftübertragungskörper 38 als Zylinder mit kreisrundem Querschnitt gestaltet. Eine zylindrische Form mit polygonalem Querschnitt ist auch möglich. Die runde Form führt jedoch zu einer gleichmä-ßigeren Kraftübertragung und demzufolge zu weniger Verschleiß und Abrieb.

Der Kraftübertragungskörper 38 kann aus einem im Vergleich zu dem der die Ausnehmungen 36,37 definierenden Armteile 9,24 elastischen Werkstoff, beispielsweise einem Elastomer, gefertigt sein. Die umgekehrte Konstellation, in der der Kraftübertragungskörper 38 beispielsweise aus Hartmetall und die Armteile 9,24 aus einem relativ weichen Material, beispielsweise Kunststoff, gefertigt ist, ist auch möglich.

Die Greifvorrichtung 3 weist in montiertem Zustand in der Baugruppe 1 nur eine geringe Erstreckung in Richtung der Rotationsachse auf. Zudem ist sie aus relativ wenig Bauteilen herstellbar.

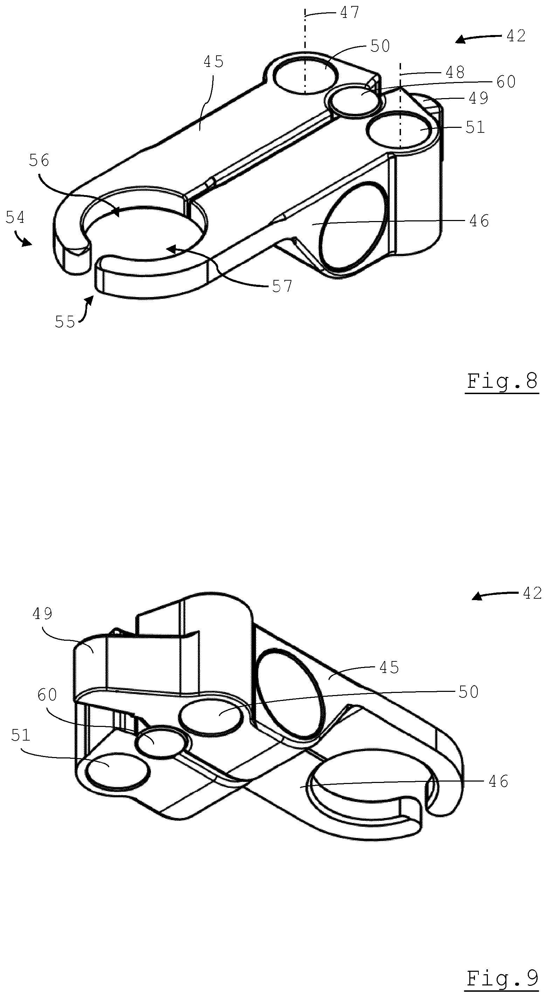

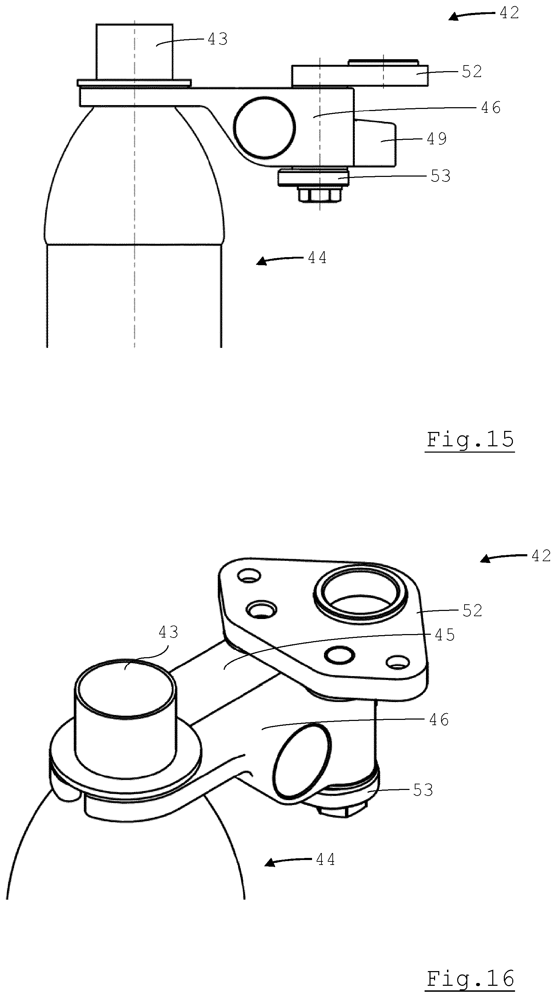

Ähnliche Effekte werden mit einer zweiten Greifvorrichtung 42 (Fig. 8-17) erreicht, welche aus noch weniger Bauteilen herstellbar ist. Sie ist außerdem dazu eingerichtet, Gegenstände mit unterschiedlichem Durchmesser ohne Beschädigung festzugreifen. Als Beispiel ist hier ein Flaschenhals 43 einer Flasche 44 gezeigt (Fig. 15, 16).

Die zweite Greifvorrichtung 42 kann, wie die der Fig. 1-7, an einem äußeren Rand eines (nicht gezeigten) Trägerrads montiert werden. Wiederum können mehrere zweite Greifvorrichtungen 42 äquidistant und in gleichem radialem Abstand zur Rotationsachse eines solchen Trägerrads angeordnet sein.

Die zweite Greifvorrichtung 42 umfasst einen ersten Arm 45 und einen zweiten Arm 46. Die Arme 45,46 bilden ein Greifarmpaar.

Im Gegensatz zu den Armen 4,5 der ersten Greifvorrichtung 3 sind die der zweiten Greifvorrichtung 42 jeweils einstückig ausgebildet.

Der erste Arm 45 ist um eine erste Schwenkachse 47 (Fig. 8) drehbar an einem mehrteiligen Träger (Fig. 15, 16) gelagert. Der zweite Arm 46 ist um eine zweite Schwenkachse 48 (Fig. 8) drehbar am Träger gelagert. Die Schwenkachsen 47,48 sind im Wesentlichen parallel zueinander ausgerichtet.

Man kann sich wiederum eine Mittelebene vorstellen, die parallel zu den beiden Schwenkachsen 47,48 zwischen den beiden Armen 45,46 verläuft und der sich die Arme 45,46 beim Schließen des Greifarmpaars nähern und von der sie sich beim Öffnen entfernen. In einer Draufsicht parallel zu den Schwenkachsen 47,48 ergibt sich eine Mittellinie. Wenn die Arme 45,46, wie vorliegend, symmetrisch angeordnet sind, bildet die Mittellinie zumindest annähernd eine Öffnungswinkelhalbierende.

Außerdem weist der erste Arm 45 einen integral ausgeformten Betätigungsabschnitt 49 auf. Der Betätigungsabschnitt 49 ist als Hebel ausgeführt und dazu eingerichtet, der Steuerkurve einer (nicht dargestellten) stationären Steuerkomponente zu folgen, wenn die zweite Greifvorrichtung 42 an letzterer vorbeigeführt wird und diese Steuerkomponente dabei kontaktiert. Dabei wird ein Drehmoment erzeugt, das auf den ersten Arm 45 ausgeübt wird. Der erste Arm 45 überträgt eine Kraft auf den zweiten Arm 46, so dass einzig die auf den einen Betätigungsteil in Form des Betätigungsabschnitts 49 ausgeübte externe Kraft beide Arme 45,46 bewegt. In der dargestellten Ausführungsform öffnet sich dabei das Greifarmpaar entgegen einer Rückstellkraft. Prinzipiell ist aber auch eine Ausführungsform denkbar, in der sich das Greifarmpaar entgegen einer Rückstellkraft schließt und der Betätigungsteil zum Öffnen des Greifarmpaars eingerichtet ist.

Die Schwenkbewegungen des ersten Arms 45 und des zweiten Arms 46 sind also auch in der zweiten Greifvorrichtung 42 gekoppelt, obwohl eine Steuerkomponente der sie umfassenden Transportvorrichtung nur ein auf den ersten Arm 45 ausgeübtes Drehmoment erzeugt.

Da der Betätigungsabschnitt 49 integraler Bestandteil des ersten Arms 45 ist, kann die drehbare Lagerung des ersten Arms 45 auf mehrere Weisen erfolgen. In der dargestellten Ausführungsform sind (nicht näher dargestellten) Wellen durch Bohrungen 50,51 geführt. Der mehrteilige Träger umfasst eine erste Trägerplatte 52 und eine zweite Trägerplatte 53 (Fig. 15, 16), zwischen und an denen die Arme 45,46 drehbar gelagert sind. Die erste Trägerplatte 52 und die zweite Trägerplatte 53 sind also in axialer Richtung beabstandet zueinander angeordnet, bezogen auf die Schwenkachsen 47,48.

Der erste Arm 45 und der zweite Arm 46 weisen benachbart freier Enden 54,55 erste Ausnehmungen 56,57 auf. Die ersten Ausnehmungen 56,57 weisen eine Innenkontur in Form eines Abschnitts eines Zylindermantels auf. Das Greifarmpaar ist in der Lage, innerhalb eines gewissen Durchmesserbereichs einen Flaschenhals 43 ohne Beschädigungen festzugreifen.

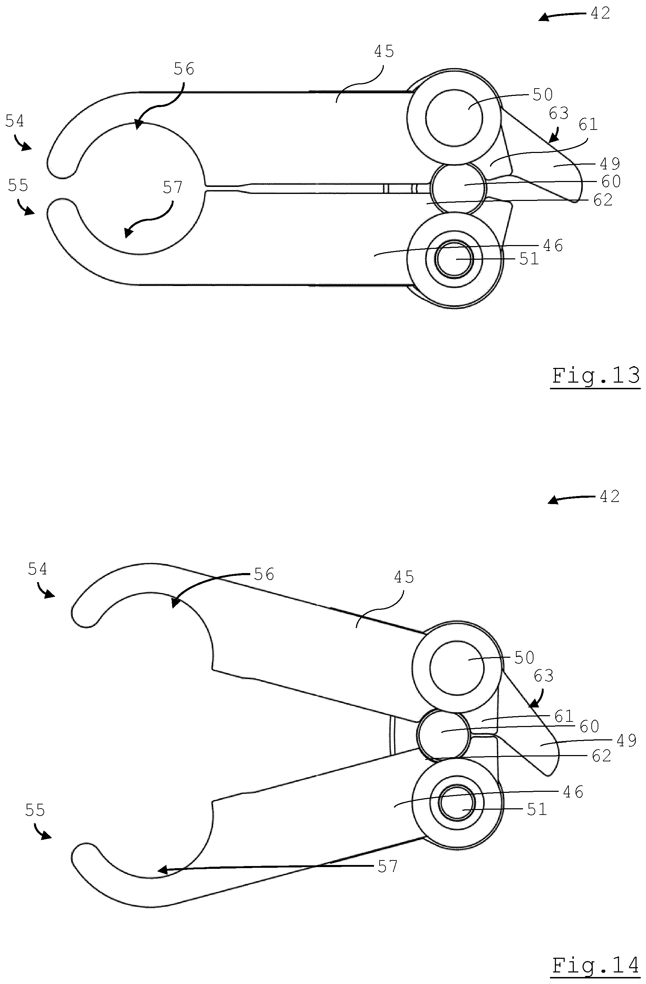

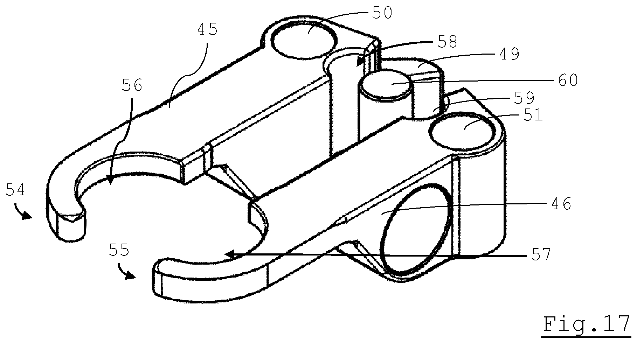

Im ersten Arm 45 und im zweiten Arm 46 sind zueinander und zur oben erwähnten Mittelebene gewandte zweite Ausnehmungen 58,59 (Fig. 17) ausgebildet. Die zweiten Ausnehmungen 58,59 sind im Wesentlichen rillenförmig ausgebildet. Die zweiten Ausnehmungen 58,59 weisen eine in axialer Richtung betrachtet runde Innenkontur auf. Sie umgeben einen Kraftübertragungskörper 60 soweit, dass eine überwiegend parallel zur oben erwähnten Mittelebene gerichtete Kraft übertragen werden kann. Ein Abschnitt 61 des ersten Arms 45 und ein Abschnitt 62 des zweiten Arms 46 (Fig. 13, 14) begrenzen einen jeweiligen Abschnitt einer Innenfläche der zweiten Ausnehmung 58 im ersten Arm 45 bzw. der zweiten Ausnehmung 59 im zweiten Arm 46. Diese Flächenabschnitte weisen eine Normale auf, die eine Hauptkomponente parallel zur oben erwähnten Mittelebene aufweist, zumindest in geschlossenem Zustand des Greifarmpaares. Außerdem ist diese Normale zwischen den Schwenkachsen 47,48 , aber beabstandet zur jeweiligen Schwenkachse 47,48, gelegen. Somit wird durch die übertragene Kraft ein Drehmoment erzeugt.

Wie in der ersten Greifvorrichtung 3 kann eine die Arme 45,46 umklammernde (nicht dargestellte) Feder eine Rückstellkraft, hier wiederum eine Schließkraft, ausüben. In anderen Ausführungsformen können zusätzlich oder alternativ anders gestaltete Einrichtungen zum Ausüben einer Rückstellkraft vorgesehen sein. Es sei in diesem Zusammenhang wieder auf die WO 2020/108758 A1 verwiesen.

Der Kraftübertragungskörper 60 ist auch in der zweiten Greifvorrichtung 42 ein länglicher Körper, dessen Längsachse sich im Wesentlichen in axialer Richtung, bezogen auf die Schwenkachsen 47,48, erstreckt. In einer alternativen Ausführungsform kann der Kraftübertragungskörper 60 kugelförmig und können die Ausnehmungen 58,59 zylindrisch oder sphärisch gestaltet sein. In der dargestellten Ausführungsform ist der Kraftübertragungskörper 60 als Zylinder mit kreisrundem Querschnitt gestaltet. Eine zylindrische Form mit polygonalem Querschnitt ist auch möglich. Die runde Form führt jedoch zu einer gleichmäßigeren Kraftübertragung und demzufolge zu weniger Verschleiß und Abrieb.

Der dargestellte Kraftübertragungskörper 60 kann als Gelenkbolzen betrachtet werden. Neben den bereits erwähnten Eigenschaften hat er auch die Eigenschaft, leicht montierbar zu sein.

Das Material des Kraftübertragungskörpers 60 ist entweder weicher oder härter als das Material zumindest der Abschnitte der Arme 45,46, in denen die zweite Ausnehmungen 58,59 ausgebildet sind. Beispielsweise kann das eine Material ein Kunststoff und das andere Material ein Metall, beispielsweise Hartmetall, sein.

Die Innenseiten der ersten Ausnehmungen 56,57 können mit einem anderen Material als dem, aus dem die Arme 45,46 hauptsächlich gefertigt sind, beschichtet oder innenseitig ausgekleidet sein.

In der dargestellten Ausführungsform weist der Betätigungsabschnitt 49 eine geringere axiale Abmessung (bezogen auf die erste Schwenkachse 47) als ein benachbarter Abschnitt des ersten Arms 45, gegenüber dem er hervorragt, auf. Hierdurch kann der Betätigungsabschnitt 49 axial beabstandet zur ersten Trägerplatte 52 und unterhalb derselben beweglich angeordnet werden.

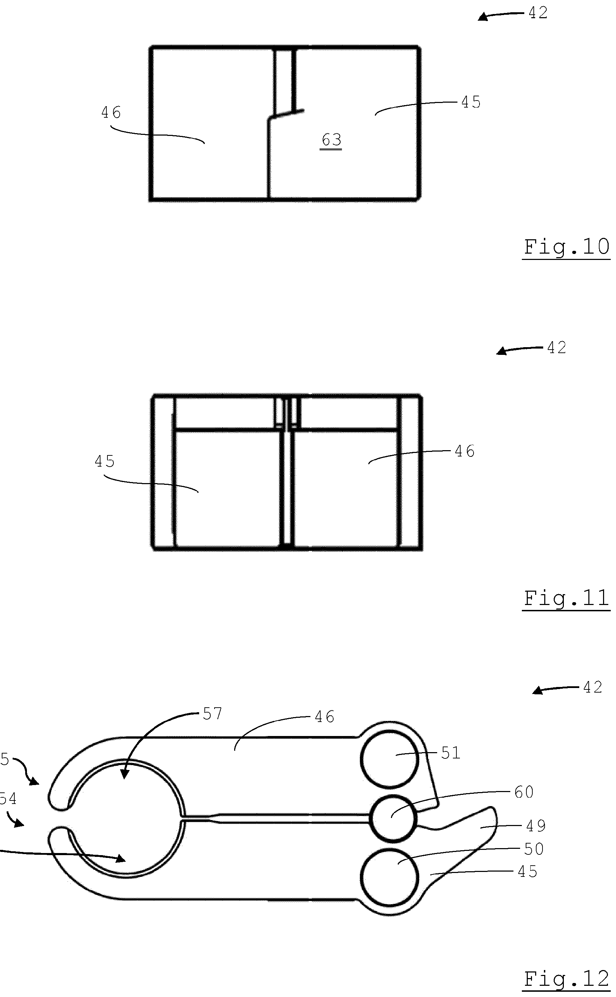

Ein in diesem Beispiel flacher Flächenabschnitt 63 (Fig. 10, 13, 14) bildet eine Kontaktfläche für die oben erwähnte Steuerkomponente zur Betätigung der zweiten Greifvorrichtung 42. Da keiner der Arme 45,46 eine Rolle aufzuweisen braucht, ist die zweite Greifvorrichtung 42 wie die erste relativ kompakt.

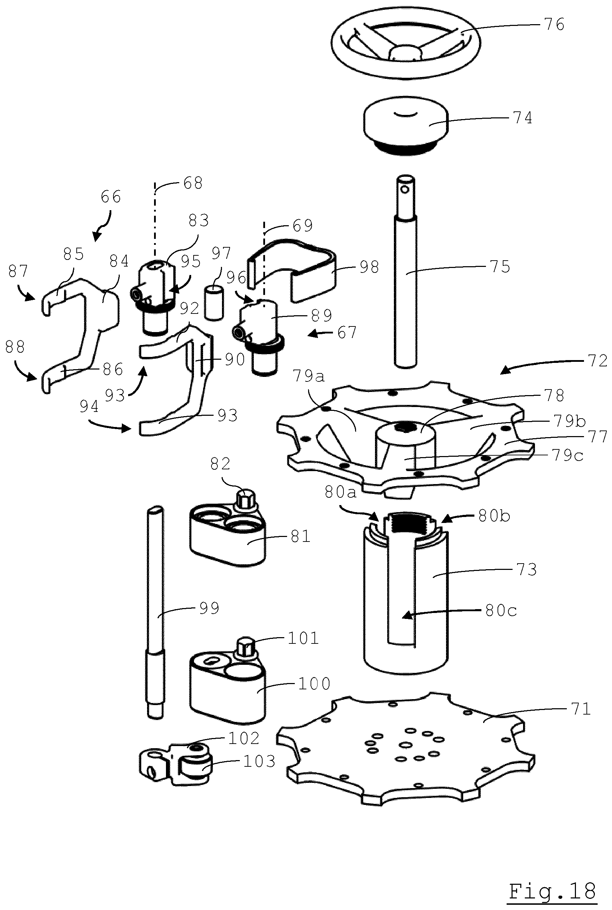

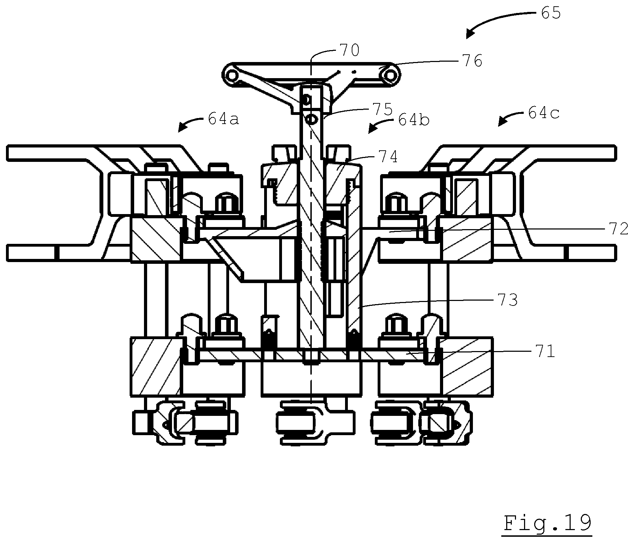

Eine dritte Greifvorrichtung 64 (Fig. 18, 19) ist eine abgewandelte Version der ersten Greifvorrichtung 3 und zur Verwendung in einer zweiten Transportvorrichtung vorgesehen. Teile einer zweiten Baugruppe 65 zur Aufnahme in die zweite Transportvorrichtung sind dargestellt. Sie weist im dargestellten Beispiel drei dritte Greifvorrichtungen 64a-c auf. Jede dritte Greifvorrichtung 64 umfasst ein aus einem ersten Arm 66 und einem zweiten Arm 67 gebildetes Greifarmpaar. Das Greifarmpaar der dritten Greifvorrichtung 64 ist höhenverstellbar. Dies heißt, dass das Greifarmpaar in axialer Richtung, bezogen auf erste und zweite Schwenkachsen 68,69 des ersten Arms 66 bzw. des zweiten Arms 67, verstellbar angeordnet ist.

Die zweite Baugruppe 65 der Transportvorrichtung ist um eine im Betrieb senkrechte Drehachse 70 (Fig. 19) drehbar. Die zweite Baugruppe 65 umfasst eine Trägerplatte 71 und eine verstellbare Stellplatte 72. Die zweite Baugruppe 65 umfasst ferner eine Führungseinrichtung, welche auf der Trägerplatte 71 befestigt ist. Diese Führungseinrichtung ist im Wesentlichen koaxial zur Drehachse 70 angeordnet. Sie umfasst einen Hohlzylinder 73, einen Abdeckungsteil 74, eine Spindel 75 und ein Stellrad 76. Die Stellplatte 72 weist einen ringförmigen Außenbereich 77, eine Nabe 78 und mehrere, den Außenbereich 77 mit der Nabe 78 verbindende Führungsstege 79a-c (Fig. 18) auf. Die Führungseinrichtung entspricht weitgehend einer in der europäischen Patentanmeldung Nr. 20175408.2 vom 19. Mai 2020 detaillierter offenbarten Führungseinrichtung.

Der Hohlzylinder 73 weist eine Mehrzahl von Führungsausnehmungen 80a-c auf. Jede Führungsausnehmung 80a-c erstreckt sich in einer im Wesentlichen parallel zur Drehachse 70 verlaufenden Richtung. Die Nabe 78 ist innerhalb des Hohlzylinders 73 in axialer Richtung beweglich angeordnet. Jeder Führungssteg 79a-c ist ebenfalls in axialer Richtung beweglich in einer der Führungsausnehmungen 80a-c geführt. Jeder Führungssteg 79 erstreckt sich in radialer Richtung wie eine Speiche eines Rads. Die Stellplatte 72 ist somit nicht gegenüber dem Hohlzylinder 73 oder der Trägerplatte 71 verdrehbar. Die Spindel 75 und die Nabe 78 sind aber mit einem Außen- bzw. einem Innengewinde versehen, um die Höhenverstellung zu ermöglichen. Dazu ist das Stellrad 76 an einem Ende der Spindel 75 fixiert. In einer alternativen Ausführungsform ist ein Aktuator zur Betätigung der Spindel 75 vorgesehen. Der Abdeckungsteil 74 schließt den Innenraum des Hohlzylinders 73 ab und bildet zugleich einen Anschlag für die axiale Bewegung der Stellplatte 72. In der dargestellten Ausführungsform ist der Abdeckungsteil 74 mittels einer Schraubverbindung mit dem Hohlzylinder 73 verbunden. Andere Verbindungsarten sind denkbar.

Der erste Arm 66 ist um die erste Schwenkachse 68 drehbar an einem Träger 81 in Form eines ersten Doppelgehäuses gelagert. Der zweite Arm 67 ist um die zweite Schwenkachse 69 drehbar an diesem Träger 81 gelagert.

Der Träger 81 ist mittels einer ersten Schraube 82 oder eines andersartigen Befestigungsmittels an der Stellplatte 72 befestigbar. Des Weiteren passt der Träger 81 formschlüssig in eine Ausnehmung am Umfang der Stellplatte 72. Der Träger 81 ist somit an der Stellplatte 72 fixiert. Die erste Schwenkachse 68 und die zweite Schwenkachse 69 sind dabei im Wesentlichen parallel zur Drehachse 70 ausgerichtet.

Das Greifarmpaar der dritten Greifvorrichtung 64 ist im Wesentlichen wie das der ersten Greifvorrichtung 3 gestaltet. Der erste Arm 66 ist folglich im Wesentlichen aus zwei Teilen aufgebaut, nämlich aus einem innenliegenden ersten Armteil 83 und einem außenliegenden zweiten Armteil 84. Der zweite Armteil 84 fungiert als Schwenkklammer. Der zweite Armteil 84 umfasst zwei in axialer Richtung (bezogen auf die erste Schwenkachse 68) gespreizte Finger 85,86, deren freie Enden 87,88 freie Enden des ersten Arms 66 bilden.

Die Finger 85,86 sind der Kontur eines Flaschenhalses angepasst, also gekrümmt.

In gleicher Weise ist der zweite Arm 67 im Wesentlichen aus zwei Teilen aufgebaut, nämlich aus einem innenliegenden ersten Armteil 89 und einem außenliegenden zweiten Armteil 90. Der zweite Armteil 90 fungiert als Schwencklammer und umfasst zwei in axialer Richtung (bezogen auf die zweite Schwenkachse 69) gespreizte Finger 91,92, deren freie Enden 93,94 freie Enden des zweiten Arms 67 bilden. Die Finger 91,92 sind der Kontur eines Flaschenhalses angepasst, also gekrümmt.

Im ersten Teil 83 des ersten Arms 66 und im ersten Teil 89 des zweiten Arms 67 sind zueinander und zur oben erwähnten Mittelebene gewandte Ausnehmungen 95,96 ausgebildet. Die Ausnehmungen 95,96 sind im Wesentlichen rillenförmig gestaltet, allerdings in axialer Richtung an den näher zum Träger 81 gelegenen jeweiligen Enden begrenzt. Auf diesen Begrenzungen stützt sich ein zwischen den Ausnehmungen 95,96 gehaltener Kraftübertragungskörper 97 ab.

Auch der Kraftübertragungskörper 97 der dritten Greifvorrichtung 64 ist ein länglicher Körper. Aufgrund der Form der Ausnehmungen 95,96 erstreckt sich die Längsachse des Kraftübertragungskörpers im Wesentlichen in axialer Richtung, bezogen auf die Schwenkachsen 68,69. In einer alternativen Ausführungsform kann der Kraftübertragungskörper 97 kugelförmig und können die Ausnehmungen 95,96 zylindrisch oder sphärisch gestaltet sein. In der dargestellten Ausführungsform ist der Kraftübertragungskörper 97 als Zylinder mit kreisrundem Querschnitt gestaltet. Eine zylindrische Form mit polygonalem Querschnitt ist auch möglich. Die runde Form führt jedoch zu einer gleichmä-ßigeren Kraftübertragung und demzufolge zu weniger Verschleiß und Abrieb.

Der dargestellte Kraftübertragungskörper 97 kann als Gelenkbolzen betrachtet werden. Dementsprechend weisen die Ausnehmungen 95,96 eine in axialer Richtung betrachtet runde Innenkontur auf.

Das Material des Kraftübertragungskörpers 97 ist entweder weicher oder härter als das Material der ersten Armteile 83,89. Beispielsweise kann das eine Material ein Kunststoff und das andere Material ein Metall, beispielsweise Hartmetall, sein.

Eine die Arme 66,67 umklammernde Feder 98 übt eine Rückstellkraft aus, im vorliegenden Fall eine Schließkraft. In anderen Ausführungsformen können zusätzlich oder alternativ andere Einrichtungen zum Ausüben einer Rückstellkraft vorgesehen sein.

Der zweite Arm 67 ist nur am Träger 81 gelagert. Der erste Arm 66 ist verdrehsicher auf einer Steuerwelle 99 montiert, allerdings entlang derselben in Längsrichtung verschiebbar. Hierzu ist die Steuerwelle 99 durch eine Bohrung im ersten Armteil 83 geführt. Die Steuerwelle 99 und die Bohrung weisen einen von einer kreisrunden Form abweichenden Querschnitt auf, so dass eine gegenseitige Verdrehung durch Formschluss verhindert wird.

An der Trägerplatte 71 ist ein zweites Doppelgehäuse 100 mittels einer zweiten Schraube 101 befestigt. Des Weiteren passt das zweite Doppelgehäuse 100 formschlüssig in eine Ausnehmung am Umfang der Trägerplatte 71. Es ist somit gegenüber der Trägerplatte 71 fixiert. Statt der zweiten Schraube 101 kann ein anderes Befestigungsmittel benutzt werden.

An einem Ende der Steuerwelle 99 ist ein Rollenhebel 102 verdrehsicher angeordnet, im Beispiel fixiert. Der Rollenhebel 102 fungiert als Betätigungskomponente für die dritte Greifvorrichtung 64.

Der Rollenhebel 102 weist eine drehbar gelagerte Rolle 103 auf. Diese ist dazu eingerichtet, der Steuerkurve einer stationären Steuerkomponente zu folgen, wenn die dritte Greifvorrichtung 64 an dieser Steuerkomponente vorbeigeführt wird und die Rolle 103 die Steuerkomponente kontaktiert. Dabei wird ein Drehmoment erzeugt, das auf den ersten Arm 66 ausgeübt wird. Der erste Arm 66 überträgt eine Kraft auf den zweiten Arm 67, so dass einzig die auf den einen Betätigungsteil ausgeübte externe Kraft beide Arme 66,67 bewegt. In der dargestellten Ausführungsform öffnet sich dabei das Greifarmpaar entgegen einer Rückstellkraft. Prinzipiell ist aber auch eine Ausführungsform denkbar, in der sich das Greifarmpaar entgegen einer Rückstellkraft schließt und der Betätigungsteil zum Öffnen des Greifarmpaars eingerichtet ist.

Durch Betätigung des Stellrads 76 können die axiale Position des Trägers 81, und daher seine axiale Entfernung zum Rollenhebel 102, geändert werden. Der Träger 81 und das Greifarmpaar werden dabei entlang der Steuerwelle 99 verschoben. Die Stellplatte 72 wird entlang der Spindel 75 verschoben. Somit kann die Transportvorrichtung leicht an die Höhe der zu transportierenden Behältnisse angepasst werden. Selbstverständlich können anstelle der zweiteiligen Arme 66,67 auch einteilige Arme wie die der zweiten Greifvorrichtung 42 genommen werden, allerdings ohne den Betätigungsabschnitt 49 am ersten Arm 45.

Allen Ausführungsformen gemeinsam ist, dass sie mit nur einem Rollenhebel 22;102 oder Betätigungsabschnitt 49 auskommen und im Bereich der Schwenkachsen 6,8;47,48;68,69 kompakt gestaltete Arme 4,5;45,46;66,67 aufweisen.

Die Erfindung ist nicht auf die vorstehend erläuterten Ausführungsformen beschränkt, welche innerhalb des durch die Ansprüche vorgegebenen Rahmens variiert werden können. Der Kraftübertragungskörper 38;60;60 kann zum Beispiel unverlierbar, aber beweglich, an einem der beiden Arme 4,5;45,46; 66,67 angeordnet sein, so dass seine Position in beiden axialen Richtungen gesichert ist.

### Bezugszeichenliste

- 1 -: Baugruppe
- 2 -: Trägerrad
- 3a-o -: Greifvorrichtung
- 4 -: 1. Arm
- 5 -: 2. Arm
- 6 -: 1. Schwenkachse
- 7 -: Träger
- 8 -: 2. Schwenkachse
- 9 -: 1. Teil des 1. Arms
- 10 -: 2. Teil des 1. Arms
- 11 -: oberer Finger des 1. Arms
- 12 -: unterer Finger des 1. Arms
- 13 -: freies Ende des oberen Fingers des 1. Arms
- 14 -: freies Ende des unteren Fingers des 1. Arms
- 15 -: Steuerwelle
- 16 -: 1. Steuerwellenschraube
- 17 -: 1. Dichtring
- 18 -: 1. Lager
- 19 -: 1. Buchse
- 20 -: 1. Scheibe
- 21 -: 2. Steuerwellenschraube
- 22 -: Rollenhebel
- 23 -: Rolle
- 24 -: 1. Teil des 2. Arms
- 25 -: 2. Teil des 2. Arms
- 26 -: oberer Finger des 2. Arms
- 27 -: unterer Finger des 2. Arms
- 28 -: freies Ende des oberen Fingers des 2. Arms
- 29 -: freies Ende des unteren Fingers des 2. Arms
- 30 -: 2. Welle
- 31 -: 1. zweite Wellenschraube
- 32 -: 2. Dichtring
- 33 -: 2. Lager
- 34 -: 2. Buchse
- 35 -: 2. zweite Wellenschraube
- 36 -: 1. Ausnehmung
- 37 -: 2. Ausnehmung
- 38 -: Kraftübertragungskörper
- 39 -: Abschnitt des 1. Teils des 1. Arms
- 40 -: Abschnitt des 1. Teils des 2. Arms
- 41 -: Feder
- 42 -: 2. Greifvorrichtung
- 43 -: Flaschenhals
- 44 -: Flasche
- 45 -: 1. Arm
- 46 -: 2. Arm
- 47 -: 1. Schwenkachse
- 48 -: 2. Schwenkachse
- 49 -: Betätigungsabschnitt
- 50 -: 1. Bohrung
- 51 -: 2. Bohrung
- 52 -: 1. Trägerplatte
- 53 -: 2. Trägerplatte
- 54 -: 1. freies Ende
- 55 -: 2. freies Ende
- 56 -: 1. Ausnehmung im 1. Arm
- 57 -: 1. Ausnehmung im 2. Arm
- 58 -: 2. Ausnehmung im 1. Arm
- 59 -: 2. Ausnehmung im 2. Arm
- 60 -: Kraftübertragungskörper
- 61 -: Abschnitt des 1. Arms
- 62 -: Abschnitt des 2. Arms
- 63 -: Flächenabschnitt
- 64 -: 3. Greifvorrichtung
- 65 -: 2. Baugruppe
- 66 -: 1. Arm
- 67 -: 2. Arm
- 68 -: 1. Schwenkachse
- 69 -: 2. Schwenkachse
- 70 -: Drehachse
- 71 -: Trägerplatte
- 72 -: Stellplatte
- 73 -: Hohlzylinder
- 74 -: Abdeckungsteil
- 75 -: Spindel
- 76 -: Stellrad
- 77 -: Außenbereich der Stellplatte
- 78 -: Nabe
- 79a-c -: Führungsstege
- 80a-c -: Führungsausnehmungen
- 81 -: Träger
- 82 -: 1. Schraube
- 83 -: 1. Teil des 1. Arms
- 84 -: 2. Teil des 1. Arms
- 85 -: oberer Finger des 1. Arms
- 86 -: unterer Finger des 1. Arms
- 87 -: oberes Ende des 1. Arms
- 88 -: unteres Ende des 1. Arms
- 89 -: 1. Teil des 2. Arms
- 90 -: 2. Teil des 2. Arms
- 91 -: oberer Finger des 2. Arms
- 92 -: unterer Finger des 2. Arms
- 93 -: oberes Ende des 2. Arms
- 94 -: unteres Ende des 2. Arms
- 95 -: Ausnehmung im 1. Arm
- 96 -: Ausnehmung im 2. Arm
- 97 -: Kraftübertragungskörper
- 98: Feder
- 99 -: Steuerwelle
- 100 -: 2. Doppelgehäuse
- 101 -: 2. Schraube
- 102 -: Rollenhebel
- 103 -: Rolle

## Patentansprüche

1. Vorrichtung zum Greifen eines Gegenstands (44), bspw. eines Behälters, umfassend:
einen Träger (7;52,53;81);
ein Greifarmpaar, welches um eine jeweilige Schwenkachse (6,8;47,48;68,69) schwenkbar am Träger (7;52,53;81) gelagerte Arme (4,5;45,46;66,67) umfasst, zwischen freien Enden (13,14,28,29;54,55;85,86,91,92) derer der Gegenstand (44) zwischen die Arme (4,5;45,46;66,67) einführbar ist;
zumindest eine Einrichtung (41;98) zum Erzeugen einer Rückstellkraft;
einen Betätigungsteil (22;49;102), auf welchen eine auf einen ersten der Arme (4,5;45,46;66,67) übertragene externe Kraft zum Drehen des ersten Arms (4;45;66) um seine Schwenkachse (6;47;68) ausgeübt werden kann; und
einen Kraftübertragungskörper (38;60;97) zum Übertragen einer Kraft vom ersten Arm (4;45;66) auf den zweiten Arm (5;46;67), die den zweiten Arm (5;46;67) um seine Schwenkachse (8;48;69) drehen lässt, so dass sich die freien Enden (13,14,28,29;54,55;85,86,91,92) gegen die Rückstellkraft in entgegengesetzten Richtungen bewegen,
wobei der Kraftübertragungskörper (38;60;97) einen zwischen dem ersten Arm (4;45;66) und dem zweiten Arm (5;46;67) angeordneten Schubkörper umfasst,
und wobei die Rückstellkraft geeignet ist, den ersten Arm (4;45;66) und/oder den zweiten Arm (5;46;67) gegen den Kraftübertragungskörper (38;60;97) zu drücken,
**dadurch gekennzeichnet, dass**
zumindest der erste Arm (4;66) auf einer am Träger (7;81) drehbar gelagerten Steuerwelle (15;99) montiert ist.

2. Vorrichtung nach Anspruch 1,
wobei der Kraftübertragungskörper (38;60;97), parallel zu den Schwenkachsen (6,8;47,48;68,69) betrachtet, zumindest zum Teil zwischen den Schwenkachsen (6,8;47,48;68,69) und den freien Enden (13,14,28,29;54,55;85,86,91,92) angeordnet ist.

3. Vorrichtung nach Anspruch 1 oder 2,
wobei der Kraftübertragungskörper (38;60;97) zumindest einen runden Abschnitt umfasst.

4. Vorrichtung nach einem der vorhergehenden Ansprüche,
wobei der Kraftübertragungskörper (38;60;97) ein länglicher Körper ist.

5. Vorrichtung nach einem der vorhergehenden Ansprüche,
wobei der erste Arm (4;45;66) und der zweite Arm (5;46;67) zueinander gewandte Ausnehmungen (36,37;58,59;95,96) aufweisen, zwischen denen der Kraftübertragungskörper (38;60;97) gehalten ist.

6. Vorrichtung nach einem der vorhergehenden Ansprüche,
wobei der Betätigungsteil (22;102) einen auf der Welle (15;99) montierten Hebel, beispielsweise einen Rollenhebel, umfasst.

7. Vorrichtung nach Anspruch 6,
wobei der Hebel (22) axial beabstandet zum ersten Arm (4;66) auf der Welle (15;99) montiert ist.

8. Vorrichtung nach Anspruch 7,
wobei zumindest einer des Hebels (102) und des ersten Arms (66) in einer Längsrichtung der Welle (99) veränderlich positionierbar ist.

9. Vorrichtung nach einem der vorhergehenden Ansprüche,
wobei die Einrichtung (41;98) zum Erzeugen einer Rückstellkraft derart ausgebildet ist, dass die Rückstellkraft zwischen den Armen (4,5;45,46;66,67) ausgeübt wird.

10. Vorrichtung nach einem der vorhergehenden Ansprüche,
wobei die Einrichtung (41;98) zum Erzeugen einer Rückstellkraft wenigstens ein zumindest indirekt mit wenigstens einem der Arme (4,5;45,46;66,67) verbundenes elastisches Element umfasst.

11. Vorrichtung nach den Ansprüchen 9 und 10,
wobei das wenigstens eine elastische Element (41) eine die Arme (4,5;45,46;66,67) verbindende Feder umfasst.

12. Vorrichtung nach Anspruch 11,
wobei die Feder (41) die Arme (4,5;45,46;66,67) umklammert.

13. Vorrichtung zum Transportieren von Gegenständen, beispielsweise Behältern, umfassend einen beweglich angeordneten Träger (2;72), an dem wenigstens eine Vorrichtung (3a-o;42;64) nach einem der vorhergehenden Ansprüche angeordnet ist.

14. Vorrichtung nach Anspruch 13,
wobei der Träger (2;72) drehbar angeordnet ist und Vielzahl an Vorrichtungen (3a-o;42;64) nach einem der Ansprüche 1-13 am Träger (2;72) angeordnet ist.

15. Vorrichtung nach Anspruch 13 oder 14,
ferner umfassend wenigstens eine Steuerkomponente, welche eine Steuerkurve zum Betätigen des Betätigungsteils (22;49;102) der am Träger (2;72) angeordneten wenigstens einen Vorrichtungen (3a-o;42;64) definiert.

## Claims

1. A device for gripping an object (44), e.g., a container, comprising:
a carrier (7;52,53;81);
a gripping arm pair which comprises arms (4,5;45,46;66,67) pivotably mounted about a respective pivot axis (6,8;47,48;68,69) on the carrier (7;52,53;81), between free ends (13,14,28,29;54,55;85,86,91,92) of which the object (44) can be introduced between the arms (4,5;45,46;66,67);
at least one device (41;98) for generating a restoring force;
an actuating part (22;49;102) onto which an external force, which is transmitted onto a first of the arms (4,5;45,46;66,67), for rotating the first arm (4;45;66) about its pivot axis (6;47;68) can be exerted; and
a force transmission body (38;60;97) for transmitting a force from the first arm (4;45;66) to the second arm (5;46;67), which force allows the second arm (5;46;67) to rotate about its pivot axis (8;48;69), so that the free ends (13,14,28,29;54,55;85,86,91,92) move against the restoring force in opposite directions,
wherein the force transmission body (38;60;97) comprises a push body arranged between the first arm (4;45;66) and the second arm (5;46;67),
and wherein the restoring force is suitable for pressing the first arm (4;45;66) and/or the second arm (5;46;67) against the force transmission body (38;60;97),
**characterised in that**
at least the first arm (4;66) is mounted on a control shaft (15;99) rotatably mounted on the carrier (7;81).

2. The device according to Claim 1,
wherein the force transmission body (38;60;97), viewed parallel to the pivot axes (6,8;47,48;68,69), is arranged at least in part between the pivot axes (6,8;47,48;68,69) and the free ends (13,14,28,29;54,55;85,86,91,92).

3. The device according to Claim 1 or 2,
wherein the force transmission body (38;60;97) comprises at least a round portion.

4. The device according to any one of the preceding claims,
wherein the force transmission body (38;60;97) is an elongated body.

5. The device according to any one of the preceding claims,
wherein the first arm (4;45;66) and the second arm (5;46;67) have recesses (36,37;58,59;95,96) facing one another, between which the force transmission body (38;60;97) is held.

6. The device according to any one of the preceding claims,
wherein the actuating part (22;102) comprises a lever mounted on the shaft (15;99), for example a roller lever.

7. The device according to Claim 6,
wherein the lever (22) is mounted on the shaft (15;99) at an axial distance from the first arm (4;66).

8. The device according to Claim 7,
wherein at least one of the lever (102) and the first arm (66) can be variably positioned in a longitudinal direction of the shaft (99).

9. The device according to any one of the preceding claims,
wherein the device (41;98) for generating a restoring force is configured such that the restoring force is exerted between the arms (4,5;45,46;66,67).

10. The device according to any one of the preceding claims,
wherein the device (41;98) for generating a restoring force comprises at least one elastic element which is connected at least indirectly to at least one of the arms (4,5;45,46;66,67).

11. The device according to Claims 9 and 10,
wherein the at least one elastic element (41) comprises a spring connecting the arms (4,5;45,46;66,67).

12. The device according to Claim 11,
wherein the spring (41) clasps the arms (4,5;45,46;66,67).

13. A device for transporting objects, for example containers, comprising a movably arranged carrier (2;72), on which at least one device (3a-o;42;64) according to any one of the preceding claims is arranged.

14. The device according to Claim 13,
wherein the carrier (2;72) is rotatably arranged and a plurality of devices (3a-o;42;64) according to any one of Claims 1-13 is arranged on the carrier (2;72).

15. The device according to Claim 13 or 14,
further comprising at least one control component which defines a control curve for actuating the actuating part (22;49;102) of the at least one device (3a-o;42;64) arranged on the carrier (2;72).

## Revendications

1. Dispositif destiné à saisir un objet (44), par exemple un récipient, comprenant :
un support (7 ; 52, 53 ; 81) ;
une paire de bras de préhension qui comprend des bras (4, 5 ; 45, 46 ; 66, 67) logés de manière pivotante autour d'un axe de pivotement (6, 8 ; 47, 48 ; 68, 69) respectif au support (7 ; 52, 53 ; 81), l'objet (44) pouvant être introduit entre les bras (4, 5 ; 45, 46 ; 66, 67) entre les extrémités libres (13, 14, 28, 29 ; 54, 55 ; 85, 86, 91, 92) desdits bras ;
au moins un équipement (41 ; 98) destiné à générer une force de rappel ;
une partie d'actionnement (22 ; 49 ; 102), sur laquelle peut être exercée une force externe transmise à un premier des bras (4, 5 ; 45, 46 ; 66, 67) pour la rotation du premier bras (4 ; 45 ; 66) autour de son axe de pivotement (6 ; 47 ; 68) ; et
un corps de transmission de force (38 ; 60 ; 97) destiné à transmettre une force à partir du premier bras (4 ; 45 ; 66) au second bras (5 ; 46 ; 67), qui fait tourner le second bras (5 ; 46 ; 67) autour de son axe de pivotement (8 ; 48 ; 69), de telle sorte que les extrémités libres (13, 14, 28, 29 ; 54, 55 ; 85, 86, 91, 92) se déplacent contre la force de rappel dans des sens opposés,
le corps de transmission de force (38 ; 60 ; 97) comprenant un corps de poussée agencé entre le premier bras (4 ; 45 ; 66) et le second bras (5 ; 46 ; 67),
et la force de rappel étant appropriée pour pousser le premier bras (4 ; 45 ; 66) et/ou le second bras (5 ; 46 ; 67) contre le corps de transmission de force (38 ; 60 ; 97),
**caractérisé**
**en ce qu'**au moins le premier bras (4 ; 66) est monté sur un arbre de commande (15 ; 99) logé rotatif sur le support (7 ; 81).

2. Dispositif selon la revendication 1,
le corps de transmission de force (38 ; 60 ; 97), considéré parallèlement aux axes de pivotement (6, 8 ; 47, 48 ; 68, 69), étant agencé au moins en partie entre les axes de pivotement (6, 8 ; 47, 48 ; 68, 69) et les extrémités libres (13, 14, 28, 29 ; 54, 55 ; 85, 86, 91, 92).

3. Dispositif selon la revendication 1 ou 2,
le corps de transmission de force (38 ; 60 ; 97) comprenant au moins une section ronde.

4. Dispositif selon l'une des revendications précédentes,
le corps de transmission de force (38 ; 60 ; 97) étant un corps allongé.

5. Dispositif selon l'une des revendications précédentes,
le premier bras (4 ; 45 ; 66) et le second bras (5 ; 46 ; 67) présentant des évidements (36, 37 ; 58, 59 ; 95, 96) orientés les uns vers les autres, entre lesquels le corps de transmission de force (38 ; 60 ; 97) est tenu.

6. Dispositif selon l'une des revendications précédentes,
la partie d'actionnement (22 ; 102) comprenant un levier, par exemple un levier à galets, monté sur l'arbre (15 ; 99).

7. Dispositif selon la revendication 6,
le levier (22) étant monté sur l'arbre (15 ; 99) axialement à distance du premier bras (4 ; 66).

8. Dispositif selon la revendication 7,
au moins un élément parmi le levier (102) et le premier bras (66) pouvant être positionné de manière variable dans la direction longitudinale de l'arbre (99).

9. Dispositif selon l'une des revendications précédentes, l'équipement (41 ; 98) destiné à générer une force de rappel étant conçu de telle sorte que la force de rappel est exercée entre les bras (4, 5 ; 45, 46 ; 66, 67).

10. Dispositif selon l'une des revendications précédentes,
l'équipement (41 ; 98) destiné à générer une force de rappel comprenant au moins un élément élastique relié au moins indirectement à au moins l'un des bras (4, 5 ; 45, 46 ; 66, 67).

11. Dispositif selon les revendications 9 et 10,
ledit au moins un élément élastique (41) comprenant un ressort reliant les bras (4, 5 ; 45, 46 ; 66, 67).

12. Dispositif selon la revendication 11,
le ressort (41) encerclant les bras (4, 5 ; 45, 46 ; 66, 67).

13. Dispositif destiné à transporter des objets, par exemple des récipients, comprenant un support (2 ; 72) agencé mobile, sur lequel est agencé au moins un dispositif (3a-o ; 42 ; 64) selon l'une des revendications précédentes.

14. Dispositif selon la revendication 13,
le support (2 ; 72) étant agencé rotatif et une multitude de dispositifs (3a-o ; 42 ; 64) selon l'une des revendications 1 à 13 étant agencés sur le support (2 ; 72).

15. Dispositif selon la revendication 13 ou 14,
comprenant en outre au moins un composant de commande, qui définit une courbe de commande pour l'actionnement de la partie d'actionnement (22 ; 49 ; 102) dudit au moins un dispositif (3a-o ; 42 ; 64) agencé sur le support (2 ; 72).
